# EUROPÄISCHE PATENTSCHRIFT

(11) **EP 3 144 182 B1**
(45) Veröffentlichungstag und Bekanntmachung des Hinweises auf die Patenterteilung: **28.04.2021**
(21) Anmeldenummer: 15181728.5
(22) Anmeldetag: 20.08.2015
(51) Int. Cl.: B60Q 1/24, B60Q 1/26, B60Q 1/32, B60Q 3/217, B60Q 3/64

(54) **VERKLEIDUNGSBAUTEIL FÜR EIN FAHRZEUG UND ENTSPRECHENDES FAHRZEUG**
CLADDING COMPONENT FOR A VEHICLE AND ASSOCIATED VEHICLE
COMPOSANT D'HABILLAGE POUR VÉHICULE ET VÉHICULE ASSOCIÉ

(43) Veröffentlichungstag der Anmeldung: 22.03.2017
(73) Patentinhaber: SMP Deutschland GmbH, 79268 Bötzingen (DE)
(72) Erfinder: Meier, Markus, 79232 March (DE); Fischer, Eric, 79106 Freiburg (DE)
(74) Vertreter: Westphal, Mussgnug & Partner Patentanwälte mbB

(56) Entgegenhaltungen:
- EP-A2- 2 703 218
- DE-A1- 4 311 359
- DE-A1-102009 039 038
- DE-A1-102011 115 208
- DE-B3-102006 014 561
- FR-A1- 2 764 852
- US-B1- 6 250 785

## Beschreibung

Die vorliegende Erfindung betrifft ein Verkleidungsbauteil für ein Fahrzeug. Weiterhin betrifft die Erfindung ein Fahrzeug mit einem derartigen Verkleidungsbauteil.

Verkleidungsbauteile von Fahrzeugen sind insbesondere Seitenschweller und Stoßfänger. Diese dienen neben der Verkleidung des Fahrzeugs auch als Schutz der Fahrzeugkarosserie vor Aufprällen und Steinschlägen sowie insbesondere bei Geländewagen und SUVs auch als Trittbrett.

Moderne Automobile weisen neben der üblichen Beleuchtung wie Fern- und Rücklicht, Blinker und Bremslicht häufig auch eine Um- oder Vorfeldbeleuchtung auf, die beispielsweise in den Seitenspiegeln und/oder den Türen und/oder den Türöffnern angeordnet ist und mit denen das unmittelbare Umfeld des Fahrzeugs beleuchtet werden kann, wenn das Fahrzeug abgestellt ist und die Benutzer ein- oder aussteigen wollen. Aus Sicherheitsgründen dürfen Vorfeldbeleuchtungen nur dann aktiviert werden, wenn das Fahrzeug steht. Sobald das Fahrzeug bewegt wird, muss die Vorfeldbeleuchtung ausgeschaltet werden. Den Benutzern des Fahrzeugs wird bei Dunkelheit das Öffnen der Tür vereinfacht, da der Türgriff deutlich sichtbar ist. Zudem sind Hindernisse auf dem Boden in unmittelbarer Umgebung der Tür durch die Vorfeldbeleuchtung sichtbar, beispielsweise Steine oder Pfützen.

Ein Nachteil derartiger in den Seitenspiegeln und/oder in den Türöffnern oder den Türen angebrachten Vorfeldbeleuchtungen ist, dass das ausgeleuchtete Vorfeld abhängig von der Stellung der Tür ist. Wenn also die Tür geöffnet wird und der Benutzer in das Fahrzeug einsteigen will, ist der Boden zwischen der geöffneten Tür und der übrigen Karosserie nicht beleuchtet, was dazu führen kann, dass der Benutzer beim Einsteigen vor dem Öffnen der Tür beleuchtete Hindernisse nicht mehr wahrnimmt und beispielsweise doch in eine Pfütze tritt. Um einem derartigen Nachteil zu begegnen, schlägt die US 8 235 568 B2 vor, eine Anzahl von LEDs am Seitenschweller zu montieren, um unabhängig von der Stellung der Tür das unmittelbare Umfeld des Fahrzeugs auszuleuchten. Nachteilig an dieser Anordnung ist jedoch, dass die LEDs das Umfeld des Fahrzeugs nur punktuell ausleuchten. Da die LEDs zumindest teilweise über die Seitenverkleidung nach außen vorragen, besteht zudem die Gefahr, dass sie durch Steinschlag oder andere Einwirkungen beschädigt oder gar zerstört werden. Zudem entsteht durch die von der Seitenverkleidung vorragenden LEDs ein optisch nachteiliger Anblick. In jedem Fall werden die LEDs im Betrieb des Fahrzeugs mehr oder weniger schnell verschmutzt. Dies ist insbesondere bei insbesondere bei SUVs ein wichtiger Punkt, da diese für Fahrten im Gelände geeignet sind, wo die Staub- und Feuchtigkeitseinwirkungen deutlich stärker sind als im normalen Straßenverkehr. Mit zunehmender Verschmutzung der LEDs nimmt die Beleuchtungsstärke des den Boden des beleuchteten Umfelds erreichenden Lichts ab. Ab einem gewissen Punkt ist die Beleuchtung so schwach, dass sie die oben genannten Vorteile nicht mehr bereitstellt.

Die DE 10 2006 014 561 B3 zeigt ein Verkleidungsbauteil für ein Fahrzeug, nämlich einen Stoßfänger, der eine Wandung umfasst, welche einen Innenraum des Verkleidungsbauteils begrenzt. Weiterhin weist das Verkleidungsbauteil eine Durchgangsöffnung auf, welche die Wandung durchdringt. Die Durchgangsöffnung kann mittels eines verstellbaren Spiegels verschließbar ausgeführt sein. Im Innenraum des Verkleidungsbauteils ist eine Beleuchtungseinrichtung angeordnet, welche mit einer Lichtquelle verbindbar ist. Der Spiegel wird durch die Heckklappe in eine Schließstellung vorgespannt, in welcher das von der Lichtquelle abgestrahlte Licht den Stoßfänger nicht verlassen kann. Wird die Heckklappe geöffnet, wird die Durchgangsöffnung geöffnet und der Spiegel so angeordnet, dass das von der Lichtquelle abgestrahlte Licht die Durchgangsöffnung durchlaufen kann.

Die FR 2 764 852 A1 zeigt eine Stufenhecklimousine mit einer Heckscheibe und einem Kofferraumdeckel, wobei auf der Hutablage eine Bremsbeleuchtung angeordnet ist. Unterhalb der Bremsbeleuchtung ist ein beweglich angeordneter parabolischer Schirm vorgesehen, welcher mittels des Kofferraumdeckels zwischen einer Schließstellung und einer Offenstellung bewegbar ist. In der Schließstellung leitet der parabolische Schirm kein von der Bremsbeleuchtung 10 abgestrahltes Licht in den Kofferraum, während in der Offenstellung von der Bremsbeleuchtung abgestrahltes Licht in den Kofferraum geleitet wird. Aufgabe der vorliegenden Erfindung ist es daher, ein Verkleidungsbauteil anzugeben, mit welchem das Umfeld eines Fahrzeugs unabhängig von der Stellung der Tür gleichmäßig ausgeleuchtet werden kann, wobei die Gefahr einer Beschädigung oder Zerstörung im Betrieb des Fahrzeuges weitgehend vermindert werden soll. Zudem soll das Umfeld des Fahrzeugs unabhängig von der Verschmutzung des Fahrzeugs gleichmäßig ausgeleuchtet werden. Gelöst wird die Aufgabe durch die in den Ansprüchen 1, und 10 angegebenen Merkmale. Vorteilhafte Ausbildungen sind Gegenstand der Unteransprüche.

Gemäß der vorliegenden Erfindung umfasst das Verkleidungsbauteil für ein Fahrzeug eine Wandung, welche einen Innenraum des Verkleidungsbauteils begrenzt, eine oder mehrere Durchgangsöffnungen, welche die Wandung durchdringen, eine im Innenraum des Verkleidungsbauteils angeordnete Beleuchtungseinrichtung, welche mit einer Lichtquelle verbindbar ist, und eine Verstelleinrichtung, mit welcher die Beleuchtungseinrichtung zwischen einer Offenstellung, in welcher von der Beleuchtungseinrichtung abgestrahltes Licht die Durchgangsöffnungen durchlaufen kann, und einer Schließstellung, in welcher das von der Beleuchtungseinrichtung abgestrahlte Licht die Durchgangsöffnungen nicht durchlaufen kann, verstellbar ist.

Neben den Lichtleitern kann die Beleuchtungseinrichtung weiterhin Kopplungselemente umfassen, mit denen das Licht von der Lichtquelle in den die Lichtleiter eingekoppelt werden kann. Zudem kann die Beleuchtungseinrichtung Halterungen umfassen, mit denen der Lichtleiter im Verkleidungsbauteil befestigt werden kann. Im Gegensatz zu der in der US 8 235 568 B2 aufgezeigten Lösung ist es erfindungsgemäß möglich, die Lichtquelle beabstandet von den Durchgangsöffnungen anzuordnen, so dass sie von äußeren Einflüssen weitgehend geschützt ist. Daher ist es nicht notwendig, dass die Lichtquelle ein Bestandteil der Beleuchtungseinrichtung sein muss. Hierdurch wird die Zuverlässigkeit der Lichtquelle und folglich der Vorfeldbeleuchtung verbessert. Wie eingangs erwähnt, darf die Vorfeldbeleuchtung nur dann verwendet werden, wenn das Fahrzeug stillsteht. Bei Stillstand des Fahrzeugs wird aber das Fahrzeug und insbesondere die äußere Wandungsoberfläche des Verkleidungsbauteils nicht oder nur in sehr geringem Umfang verschmutzt. Aufgrund der erfindungsgemäßen Eigenschaft der Beleuchtungseinrichtung, zwischen der Offenstellung, in welcher das abgestrahlte Licht die Durchgangsöffnungen durchlaufen kann, und der Schließstellung, in welcher das abgestrahlte Licht die Durchgangsöffnungen nicht durchlaufen kann, bewegt zu werden, wird die Beleuchtungseinrichtung nur dann in die Offenstellung gebracht, wenn auch das Umfeld beleuchtet werden soll. Wie oben ausgeführt, befindet sich dann das Fahrzeug im Stillstand, so dass die Beleuchtungseinrichtung in der Offenstellung nicht oder nur unwesentlich verschmutzt wird. Sobald das Fahrzeug bewegt wird, darf das Umfeld nicht mehr beleuchtet werden, so dass dann die Beleuchtungseinrichtung in die Schließstellung gebracht werden kann. Die dann auftretenden Verschmutzungen der Beleuchtungseinrichtung sind insofern nicht von größerem Nachteil, als dass in der Schließstellung ohnehin kein Licht abgestrahlt werden soll. Insofern ist es vorschlagsgemäß möglich, das Umfeld unabhängig von der Verschmutzung des Fahrzeugs und insbesondere der äußeren Wandungsoberfläche des Verkleidungsbauteils mit einer ausreichenden Beleuchtungsstärke zu beleuchten.

Dabei umfasst die erfindungsgemäße Beleuchtungseinrichtung zumindest einen mit der Verstelleinrichtung zusammenwirkenden Lichtleiter, der einen oder mehrere Auskopplungsabschnitte aufweist, in denen das Licht aus dem Lichtleiter austreten kann, wobei die Verstelleinrichtung in der Offenstellung die Auskopplungsabschnitte so in Bezug zu den Durchgangsöffnungen anordnet, dass das Licht die Durchgangsöffnungen durchlaufen kann. Die Lichtleiter können beispielsweise aus PMMA (Polymethylmethacrylat), PC (Polycarbonat) PU (Polyurethan) oder Glasfasern bestehen oder diese Komponenten umfassen. In diesem Fall ist der Lichtleiter starr. Die Auskopplungsabschnitte können eine Anzahl von Kerben und/oder Ausbeulungen umfassen. Die Kerben oder Ausbeulungen, die auf der Oberfläche des Lichtleiters ausgebildet sind und vorzugsweise in etwa senkrecht zur Längsachse des Lichtleiters verlaufen, bewirken Beugungs- und Brechungseffekte, welche zu einer radialen Auskopplung des Lichts durch die Oberfläche aus dem im Wesentlichen rohrförmigen Lichtleiter führen, wobei das Licht über den Abschnitt der Oberfläche austritt, der den Kerben oder Ausbeulungen gegenüber liegt. Je größer der Umfang, den die Kerben oder Ausbeulungen auf der Oberfläche des Lichtleiters überstreichen, desto weiter erstreckt sich auch der Auskopplungsabschnitt in einer Ebene, die senkrecht zur Längsachse verläuft.

Die Verwendung von Lichtleitern ermöglicht es, die Durchgangsöffnungen flexibel im Verkleidungsbauteil anzuordnen und ihre Abmessungen flexibel zu wählen. Hierdurch ist es möglich, eine sehr gleichmäßige Ausleuchtung des Umfelds des Fahrzeugs zu realisieren, so dass die Gefahr, dass der Benutzer nicht oder nur unzureichend ausgeleuchtete Gegenstände und Hindernisse im unmittelbaren Umfeld des Fahrzeugs übersieht, deutlich reduziert wird. Dadurch, dass die Lichtleiter im Innenraum des Verkleidungsbauteils angeordnet sind, sind sie vor äußeren Einflüssen und insbesondere vor Verschmutzung geschützt. In dieser Weiterbildung ist es möglich, die Auskopplungsabschnitte nur in der Offenstellung so in Bezug auf die Durchgangsöffnungen anzuordnen, dass das Licht, welches den Lichtleiter in den Auskopplungsabschnitten verlässt, die Durchgangsöffnungen auch durchlaufen kann. Voraussetzung hierfür ist eine räumliche Nähe der Auskopplungsabschnitte zu den Durchgangsöffnungen. Die räumliche Nähe kann durch eine entsprechende Bewegung des Lichtleiters in Bezug auf das Verkleidungsbauteil und insbesondere in Bezug auf die Durchgangsöffnungen hergestellt werden. Befinden sich die Auskopplungsabschnitte in dieser räumlichen Nähe zu den Durchgangsöffnungen, befinden sie sich bzw. befindet sich die Beleuchtungseinrichtung in der Offenstellung, in welcher die Auskopplungsabschnitte einer Verschmutzung ausgesetzt sind. Wie eingangs erwähnt, ist dies insofern nicht von Nachteil, als dass das Umfeld des Fahrzeugs nur im Stillstand beleuchtet werden darf, in welchem die Verschmutzung aber im Vergleich zum bewegten Zustand des Fahrzeugs in deutlich geringerem Umfang auftritt. Wird das Fahrzeug in Bewegung versetzt und das Umfeld des Fahrzeugs nicht mehr beleuchtet, werden die Auskopplungsabschnitte in die Schließstellung gestellt, in der sie nicht mehr in einer räumlichen Nähe zu den Durchgangsöffnungen angeordnet sein müssen. In der Schließstellung wird eine Verschmutzung der Auskopplungsabschnitte verhindert oder zumindest deutlich reduziert.

Der Lichtleiter, der eine Längsachse aufweist, kann mittels der Verstelleinrichtung zwischen der Offenstellung und der Schließstellung um die Längsachse drehbar oder entlang der Längsachse axial verschiebbar oder zwischen der Offenstellung und der Schließstellung schwenkbar sein. Die Art der Bewegung zwischen der Offenstellung und der Schließstellung spielt für die technische Umsetzung der erfinderischen Idee keine Rolle. Je nach den Einbaubedingungen kann in die eine oder die andere Bewegungsform gewählt werden, so dass die erfinderische Idee flexibel umgesetzt werden kann. Werden die Lichtleiter gedreht, so können die Auskopplungsabschnitte in eine den Durchgangsöffnungen abgewandte Stellung gebracht werden. Die Kerben oder Ausbeulungen werden dann so ausgebildet, dass sie nur einen entsprechend kleinen Teil der Oberfläche überstreichen, so dass der Auskopplungsabschnitt in der Schließstellung geschützt angeordnet ist. Werden die Lichtleiter axial bewegt, so können die Auskopplungsabschnitte in Bereiche verschoben werden, in denen sich keine Durchgangsöffnungen befinden. In beiden Fällen werden die Auskopplungsabschnitte in der Schließstellung vor Verschmutzung geschützt, so dass das Umfeld des Fahrzeugs unabhängig vom Verschmutzungsgrad des Fahrzeugs ausgeleuchtet werden kann.

Es bietet sich an, dass die Durchgangsöffnungen mit Verschlussmitteln verschließbar sind. Die Verschlussmittel können eine Klappe umfassen, die in der Offenstellung geöffnet und in der Schließstellung geschlossen ist. Der Lichtleiter und insbesondere der Auskopplungsabschnitt können so vor Verschmutzung und vor Beschädigungen geschützt werden. Zwar kann das Verschlussmittel auch als eine unbewegliche transparente Schicht ausgestaltet werden, die ebenfalls dafür sorgt, dass der Lichtleiter und insbesondere der Auskopplungsabschnitt vor Verschmutzungen und Beschädigungen geschützt werden. Allerdings kann eine Verschmutzung der transparenten Schicht dazu führen, dass kein oder nur wenig Licht die Durchgangsöffnungen durchlaufen kann. Demgegenüber hat eine Klappe den Vorteil, dass sie im geöffneten Zustand einen Spalt bildet, den das Licht frei von störenden Verschmutzungen durchlaufen kann, so dass Verschmutzungen nicht dazu führen, dass kein Licht oder nur ein geringer Teil des Lichts die Durchgangsöffnungen passieren kann.

Darüber hinaus können die Verschlussmittel mit der Verstelleinrichtung betätigbar und die Durchgangsöffnungen in der Offenstellung geöffnet und in der Schließstellung geschlossen sein. Wird beispielsweise der Lichtleiter axial zwischen der Offenstellung und der Schließstellung bewegt, kann dieser mit einer ebenfalls in derselben axialen Richtung verschiebbaren Klappe gekoppelt sein, so dass die Klappe der Bewegung des Lichtleiters folgt und dadurch gleichzeitig geöffnet und geschlossen wird. Der Vorteil dieser Ausführungsform liegt darin, dass für das Öffnen und Schließen der Verschlussmittel keine zusätzliche Baueinheit bereitgestellt werden muss. Hierdurch werden sowohl der konstruktive Aufwand, der Montageaufwand sowie das Zusatzgewicht des erfindungsgemäßen Verkleidungsbauteils gering gehalten.

In einer Fortbildung der Erfindung weist der Lichtleiter eine Längsachse auf und ist mittels der Verstelleinrichtung zwischen der Offenstellung und der Schließstellung um die Längsachse drehbar, wobei der Lichtleiter einen oder mehrere exzentrische Abschnitte aufweist, die so mit den Verschlussmitteln zusammenwirken, dass die Durchgangsöffnungen durch Drehen des Lichtleiters geöffnet und geschlossen werden können. Die exzentrischen Abschnitte wirken wie Nocken, welche auf die in diesem Fall drehbar gelagerten Klappen einwirken und diese öffnen oder schließen. Die Klappen können mit Drehfedern zusammenwirken, mit denen die Klappen beispielsweise in die Schließstellung vorgespannt werden. Die Nocken öffnen dann die Klappen gegen die Wirkrichtung der Drehfedern, wenn der Lichtleiter um die eigene Längsachse gedreht wird. Zum Schließen der Klappen muss der Lichtleiter einfach nur in die entgegengesetzte Richtung gedreht werden. Die Drehfedern schließen dann die Klappen. Alternativ können die Klappen mit dem Lichtleiter verbunden sein, so dass die Drehung des Lichtleiters um die Längsachse ausgenutzt werden kann, um die Klappen zu öffnen oder zu schließen, beispielsweise über eine Gleit-, Seil- oder Zahnradverbindung. Ebenfalls denkbar ist eine direkte Verbindung der Klappen mit der Verstelleinrichtung unter Umgehung des Lichtleiters.

Es bietet sich an, wenn die Beleuchtungseinrichtung eine im Wesentlichen rohrförmige Hülse umfasst, welche den Lichtleiter umschließt, wobei die Hülse einen oder mehrere lichtdurchlässige Abschnitte aufweist, in denen das Licht aus der Hülse austreten kann und die Hülse mittels der Verstelleinrichtung zwischen der Offenstellung und der Schließstellung verstellbar ist. Die Verwendung einer Hülse hat den Vorteil, dass der Lichtleiter selbst nicht gedreht werden muss und in seiner Einbauposition verbleiben kann. Der Lichtleiter kann alternativ so mit der Hülse verbunden sein, dass er den Bewegungen der Hülse folgt. Wie oben bereits erläutert, ist man in der Materialauswahl des Lichtleiters beschränkt. PMMA (Polymethylmethacrylat), PC (Polycarbonat) oder PU (Polyurethan) können aber bei häufigen Drehbewegungen verschleißen und somit zum Ausfall des Lichtleiters führen. Demgegenüber kann die Hülse aus einem Material, beispielsweise Stahl, gefertigt werden, welches für die bei der Drehung auftretenden Kräfte und Momente besonders gut geeignet ist. Insbesondere ist es möglich, die Hülse mittels Kugel- oder Wälzlagern drehbar zu lagern, was mit dem Lichtleiter aufgrund der Eigenschaften der oben genannten Materialien nur bedingt möglich ist. Insbesondere ist es bei der Verwendung einer Hülse möglich, den Lichtleiter selbst aus einem flexiblen Material zu fertigen, so dass man in der Verwendung der verfügbaren Lichtleiter flexibler ist. Der lichtdurchlässige Abschnitt der Hülse kann durch eine Öffnung realisiert sein. Alternativ kann die Hülse insgesamt aus einem intransparenten Material gefertigt sein. Das intransparente Material kann zudem reflektierend sein, so dass das Licht, das aus dem Lichtleiter austritt, von der Hülse zurück in den Lichtleiter geleitet und folglich im Lichtleiter weitergeleitet wird. Der lichtdurchlässige Abschnitt kann dadurch realisiert sein, dass er von der Beschichtung ausgespart ist.

Ferner kann die Hülse eine Längsachse aufweisen und mittels der Verstelleinrichtung zwischen der Offenstellung und der Schließstellung um die Längsachse drehbar sein, wobei die Hülse einen oder mehrere exzentrische Hülsenabschnitte aufweist, die so mit den Verschlussmitteln zusammenwirken, dass die Durchgangsöffnungen durch Drehen des Lichtleiters geöffnet und geschlossen werden können. Die exzentrischen Hülsenabschnitte wirken wie Nocken, welche auf die in diesem Fall drehbar gelagerten Klappen einwirken und diese öffnen oder schließen. Die Klappen können Drehfedern aufweisen, mit denen die Klappen beispielsweise in die Schließstellung vorgespannt werden. Die exzentrischen Hülsenabschnitte öffnen dann die Klappen gegen die Wirkrichtung der Drehfedern, wenn die Hülse gedreht wird. Zum Schließen der Klappen muss die Hülse einfach nur in die entgegengesetzte Richtung gedreht werden. Die Drehfedern schließen dann die Klappen.

Bevorzugt weisen der Lichtleiter, die Verschlussmittel und/oder die Hülse eine Schutzschicht auf, mittels welcher die Beleuchtungseinrichtung vor Beschädigungen schützbar ist. Die Schutzschicht kann besonders hart und/oder schmutzabweisend ausgestaltet sein. Insbesondere dann, wenn weder Verschlussmittel noch Hülsen verwendet werden, ist der Lichtleiter in der Schließstellung der unmittelbaren Einwirkung von Schmutz und Steinschlag ausgesetzt. Die Schutzschicht, die auch opak sein kann, ist auf diese Belastungen ausgelegt, so dass insbesondere der Auskopplungsabschnitt vor Beschädigungen und Verschmutzungen geschützt wird. In diesem Fall ist es möglich, den Lichtleiter unmittelbar benachbart oder angrenzend zur Durchgangsöffnung oder in die Durchgangsöffnung hineinragend zu positionieren, so dass der Lichtleiter die Durchgangsöffnung zumindest teilweise verschließt. Insbesondere ist es möglich, den Lichtleiter mit einer Dichtung zusammen wirken zu lassen. Somit können kein Schmutz und Feuchtigkeit in den Innenraum des Verkleidungsbauteils eindringen und dort Schäden an der Lichtquelle oder anderen Bauteilen anrichten. Die Schutzschicht kann in Form eines Lackes auf den Lichtleiter, auf die Verschlussmittel oder die Hülse aufgebracht werden. Ebenso ist ein Zwei-Komponenten-Spritzguss oder eine Metallisierung möglich. In vielen Ländern gelten Sicherheitsbestimmungen, wonach weißes Licht nicht seitlich von einem Fahrzeug abgestrahlt werden darf. Da aber weißes Licht die beste Ausleuchtung des Umfelds des Fahrzeugs ermöglicht, muss die seitliche Abstrahlung bei Verwendung von weißem Licht vermieden werden. Die Schutzschicht kann als eine Art Blende verwendet werden, welche den seitlichen Austritt von weißem Licht verhindert.

Ferner können die Durchgangsöffnungen und/oder die Beleuchtungseinrichtung und/oder die Verstelleinrichtung und/oder die Lichtquelle auf einem separaten Wandungsabschnitt angeordnet sein, der mit der Wandung verbindbar ist. Hieraus resultieren montagetechnische Vorteile, da diese Komponenten bereits vormontiert werden können und anschließend nur noch mit dem übrigen Verkleidungsbauteil verbunden werden müssen, beispielsweise durch eine Klebe- oder Clips-Verbindung. In vielen Fällen weisen die Verkleidungsbauteile eine sehr verwinkelte und gewölbte Struktur auf, wodurch die Montage der Beleuchtungseinrichtung und/oder der Lichtquelle sowie die Fertigung der Durchgangsöffnungen erschwert werden. Durch das Vorsehen eines separaten Wandungsabschnitts kann der verfügbare Arbeitsraum bei der Befestigung der Beleuchtungseinrichtung und/oder der Lichtquelle vergrößert und die Komplexität der Montage verringert werden, was insbesondere dann der Fall ist, wenn der separate Wandungsabschnitt eben oder weitgehend eben ist. Die Durchgangsöffnungen lassen sich besonders einfach mit ebenen Wandungsabschnitten fertigen, beispielsweise durch Stanzen, Spritzen oder Fräsen. Darüber hinaus ist es möglich, den separaten Wandungsabschnitt bei einem Zulieferer zu fertigen und im fertigmontierten Zustand an das Band zu liefern. Selbstverständlich kann der separate Wandungsabschnitt auch schon beim Zulieferer selbst mit dem Verkleidungsbauteil verbunden werden und als Einheit an das Band geliefert werden.

Zudem betrifft die Erfindung ein Fahrzeug, welches ein Verkleidungsbauteil nach einem der zuvor vorgestellten Ausführungsbeispiele umfasst. Die technischen Effekte und Vorteile, die mit diesem Fahrzeug erzielt werden können, entsprechen denjenigen, die für die entsprechenden Ausführungsbeispiele der Verkleidungsbauteile diskutiert worden sind. Zusammenfassend soll an dieser Stelle erwähnt werden, dass es mit den erfindungsgemäßen Verkleidungsbauteile möglich ist, das Umfeld eines Fahrzeugs unabhängig von der Stellung der Tür oder der Türen gleichmäßig auszuleuchten, wobei die Wahrscheinlichkeit, dass es zu Zerstörungen oder Beschädigungen der Vorfeldbeleuchtung im Betrieb des Fahrzeugs kommt, stark reduziert ist. Zudem kann das Vorfeld unabhängig von der Verschmutzung des Fahrzeugs und insbesondere der äußeren Wandungsoberfläche des Verkleidungsbauteils beleuchtet werden.

Das Verkleidungsbauteil kann so am Fahrzeug montiert sein, dass das die Durchgangsöffnungen durchdringende Licht beim bestimmungsgemäßen Gebrauch des Fahrzeugs zum Boden hin abstrahlt. Wie bereits erwähnt, ist es aufgrund von länderspezifischen gesetzlichen Vorschriften in einigen Ländern nicht erlaubt, weißes Licht seitlich von einem Fahrzeug abzustrahlen. Häufig darf nur orangenes Licht seitlich abgestrahlt werden. Orangenes Licht weist aber den Nachteil auf, dass es die von ihm beleuchteten Abschnitte nicht besonders gut sichtbar ausleuchtet. Dadurch, dass es erfindungsgemäß möglich ist, das die Durchgangsöffnungen durchdringende Licht nur zum Boden hin abstrahlen zu lassen, kann weißes Licht verwendet werden, wodurch das Umfeld des Fahrzeugs besonders gut sichtbar ausgeleuchtet wird. Zudem sind die Durchgangsöffnungen für den Benutzer im Normalfall nicht sichtbar, was aus ästhetischer Sicht vorteilhaft ist. Da die Benutzer im Normalfall nicht direkt auf die Durchgangsöffnungen schauen, werden sie auch nicht vom austretenden Licht geblendet.

Es bietet sich an, wenn das Verkleidungsbauteil eine Seitenverkleidung, ein Seitenschweller, ein Trittbrett oder ein Stoßfänger des Fahrzeugs ist. Derartige Verkleidungsbauteile ändern ihre Position relativ zum Fahrzeug im Gegensatz zu Türen nicht. Insofern wird das Umfeld des Fahrzeugs unabhängig von der Stellung der Türen oder Heckklappen ausgeleuchtet. Hierdurch wird die Gefahr verringert, dass der Benutzer des Fahrzeugs trotz anfänglicher Beleuchtung des Umfelds des Fahrzeugs nach Öffnen der Tür doch mit einem Gegenstand in Berührung kommt und sich dadurch verschmutzt oder verletzt.

Die Erfindung wird im Folgenden anhand von Ausführungsbeispielen unter Bezugnahme auf die anhängenden Zeichnungen im Detail erläutert. Es zeigen
- Figur 1a: ein erstes Ausführungsbeispiel eines erfindungsgemäßen Verkleidungsbauteils, bei dem sich eine Beleuchtungseinrichtung in einer Offenstellung befindet,
- Figur 1b: das in Figur 1b gezeigte Ausführungsbeispiel, bei dem sich die Beleuchtungseinrichtung in der Schließstellung befindet,
- Figur 2a: ein zweites Ausführungsbeispiel des erfindungsgemäßen Verkleidungsbauteils, bei dem sich die Beleuchtungseinrichtung in der Offenstellung befindet,
- Figur 2b: das in Figur 2a gezeigte Ausführungsbeispiel, bei dem sich die Beleuchtungseinrichtung in der Schließstellung befindet,
- Figur 3a: ein drittes Ausführungsbeispiel des erfindungsgemäßen Verkleidungsbauteils, bei dem sich die Beleuchtungseinrichtung in der Schließstellung befindet,
- Figur 3b: das in Figur 3a gezeigte Ausführungsbeispiel, bei dem sich die Beleuchtungseinrichtung in der Offenstellung befindet,
- Figur 4a: eine prinzipielle Draufsicht auf einen erfindungsgemäßen Lichtleiter, der im dritten Ausführungsbeispiel des Verkleidungsbauteils verwendet werden kann,
- Figur 4b: eine Schnittdarstellung durch den in Figur 4a dargestellten Lichtleiter entlang der in Figur 4a definierten Schnittebene A-A,
- Figur 4c: eine Schnittdarstellung durch den in Figur 4a dargestellten Lichtleiter entlang der in Figur 4a definierten Schnittebene B-B,
- Figur 5a: ein viertes Ausführungsbeispiel des erfindungsgemäßen Verkleidungsbauteils, bei dem sich die Beleuchtungseinrichtung in der Schließstellung befindet,
- Figur 5b: das in Figur 5a gezeigte Ausführungsbeispiel, bei dem sich die Beleuchtungseinrichtung in der Offenstellung befindet,
- Figur 6a: eine prinzipielle Draufsicht auf einen erfindungsgemäßen Lichtleiter, der im vierten Ausführungsbeispiel des Verkleidungsbauteils verwendet werden kann,
- Figur 6b: eine Schnittdarstellung durch den in Figur 6a dargestellten Lichtleiter entlang der in Figur 6a definierten Schnittebene D-D,
- Figur 6c: eine Schnittdarstellung durch den in Figur 6a dargestellten Lichtleiter entlang der in Figur 6a definierten Schnittebene E-E,
- Figur 7a: ein fünftes Ausführungsbeispiel des erfindungsgemäßen Verkleidungsbauteils, bei dem sich die Beleuchtungseinrichtung in der Schließstellung befindet,
- Figur 7b: das in Figur 7a gezeigte Ausführungsbeispiel in einer ersten Offenstellung, und
- Figur 7c: das in Figur 7a gezeigte Ausführungsbeispiel in einer zweiten Offenstellung.

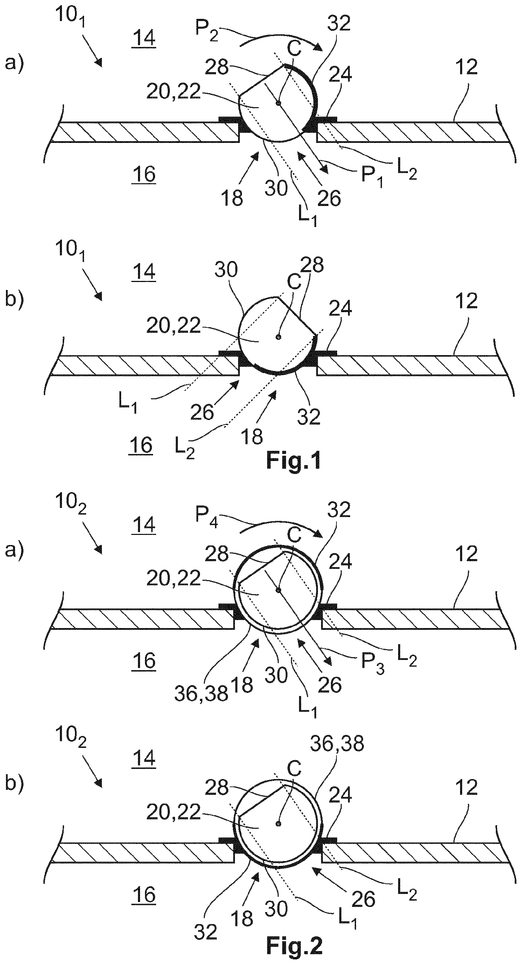

In Figur 1a ist ein erstes Ausführungsbeispiel eines vorschlagsgemäßen Verkleidungsbauteils 10₁ anhand einer Schnittdarstellung prinzipiell dargestellt. Das Verkleidungsbauteil 10₁ weist eine Wandung 12 auf, welche einen Innenraum 14 von einem Außenbereich 16 trennt. Die Wandung 12 wird von einer Durchgangsöffnung 18 durchdrungen. Weiterhin weist das Verkleidungsbauteil 10₁ eine Beleuchtungseinrichtung 20 auf, die im dargestellten Beispiel einen in etwa rohrförmigen, starren Lichtleiter 22 umfasst. Die Beleuchtungseinrichtung 20 weist weiterhin nicht dargestellte Befestigungsmittel auf, mit denen der Lichtleiter 22 im Verkleidungsbauteil 10₁ befestig ist. Weiterhin umfasst die Beleuchtungseinrichtung 20 nicht dargestellte Kopplungselemente, mit denen das von einer nicht dargestellten Lichtquelle erzeugtes Licht in den Lichtleiter 22 eingekoppelt werden kann. Der Lichtleiter 22 verläuft dabei entlang der Durchgangsöffnung 18 und ragt teilweise in die Durchgangsöffnung 18 hinein. Ferner weist das Verkleidungsbauteil 10₁ eine Dichtung 24 auf, welche den Freiraum zwischen der Wandung 12 und dem Lichtleiter 22 ausfüllt und somit die Durchgangsöffnung 18 abdichtet.

Darüber hinaus weist der Lichtleiter 22 einen Auskopplungsabschnitt 26 auf, der beispielsweise eine Anzahl von Kerben 28 umfasst, die ausgehend von einer Oberfläche 30 des Lichtleiters 22 in das Innere des Lichtleiters 22 hineinragen. Nicht dargestellt ist der Fall, dass der Auskopplungsabschnitt 26 eine Anzahl von Ausbeulungen umfasst. Die Kerben 28 und die Ausbeulungen bewirken, dass ein Teil des Lichts, welches von der Lichtquelle in den Lichtleiter 22 eingekoppelt wird, im Auskopplungsabschnitt 26, der sich bis zu einem den Kerben 28 gegenüberliegenden Abschnitt der Oberfläche 30 erstreckt, radial aus dem Lichtleiter 22 austritt. Die seitlichen Grenzen des Auskopplungsabschnitts 26 sind mit den gestrichelten Linien L₁ und L₂ gekennzeichnet. Die Richtung, entlang welcher das Licht radial aus dem Lichtleiter 22 austritt, ist mit dem Pfeil P₁ gekennzeichnet.

In Figur 1a befindet sich die Beleuchtungseinrichtung 20 in der Offenstellung, in welcher der Lichtleiter 22 eine Drehstellung einnimmt, in der das radial austretende Licht die Durchgangsöffnung 18 durchlaufen kann. Man erkennt, dass das Licht die Durchgangsöffnung 18 nicht senkrecht, sondern bezogen auf die in Figur 1a gewählte Darstellung in etwa in einem Winkel von 45° nach rechts unten durchläuft. Hierdurch wird erreicht, dass nicht nur das unmittelbar unterhalb der Durchgangsöffnung 18 befindliche Umfeld des Fahrzeugs beleuchtet wird, sondern auch dasjenige Umfeld, welches seitlich von der Durchgangsöffnung 18 und außerhalb des Fahrzeugs angeordnet ist. Somit wird das ausgeleuchtete Umfeld vergrößert, wodurch störende Gegenstände wie Steine oder Pfützen seitlich vom oder hinter dem Fahrzeug besser identifiziert werden können.

Weiterhin weist der Lichtleiter 22 eine Schutzschicht 32 auf, welche im dargestellten Beispiel auf der Oberfläche 30 des Lichtleiters 22 angeordnet ist und die Oberfläche 30 teilweise überstreicht. Im dargestellten Beispiel ist die Schutzschicht 32 so angeordnet, dass sie zwar in den Auskopplungsabschnitt 26 in der Offenstellung der Beleuchtungseinrichtung 20, nicht aber über die Dichtung 24 hinaus in die Durchgangsöffnung 18 hineinreicht. Folglich stört die Schutzschicht 32 das radial austretende Licht beim Durchtritt durch die Durchgangsöffnung 18 nicht. Selbstverständlich können der Auskopplungsabschnitt 26 und die Schutzschicht 32 so angeordnet werden, dass die Schutzschicht 32 an den seitlichen Grenzen des Auskopplungsabschnitts 26 endet.

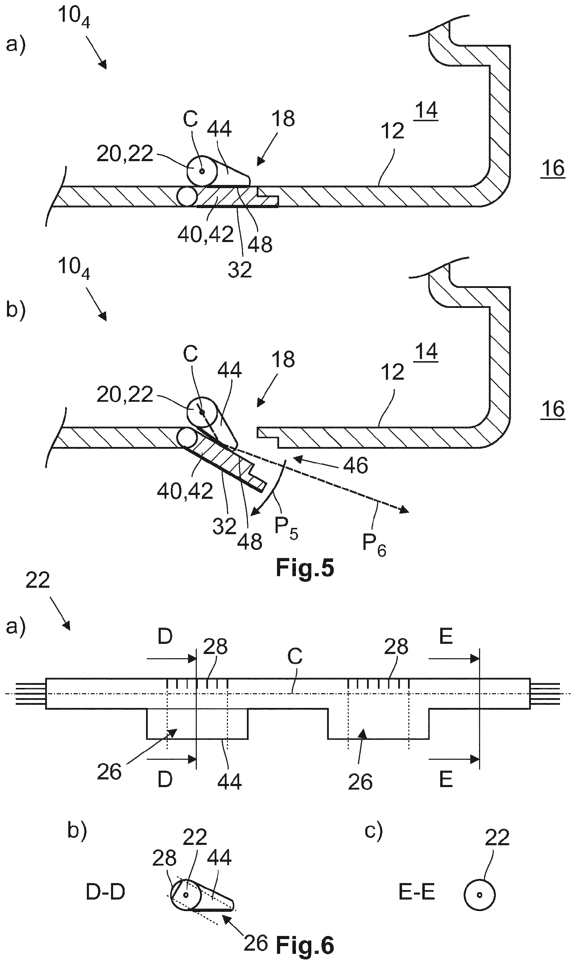

In Figur 1b befindet sich die Beleuchtungseinrichtung 20 der in Figur 1a dargestellten Ausführungsform des Verkleidungsbauteils 10₁ in der Schließstellung. Die Beleuchtungseinrichtung 20 wird dadurch in die Schließstellung gebracht, dass der Lichtleiter 22 mit einer hier nicht dargestellten Verstelleinrichtung 34 (vgl. Figuren 5a-c) ausgehend von der Offenstellung in die durch den Pfeil P₂ dargestellte Richtung gedreht wird. Hierdurch wird erreicht, dass die Schutzschicht 32 in die Durchgangsöffnung 18 gedreht wird und diese verschließt. Durch das Drehen des Lichtleiters 22 in die Schließstellung kann das Licht, welches im Auskopplungsabschnitt 26 radial aus dem Lichtleiter 22 austritt, die Durchgangsöffnung 18 nicht mehr passieren.

In den Figuren 2a und 2b ist ein zweites Ausführungsbeispiel des vorschlagsgemäßen Verkleidungsbauteils 10₂ anhand einer prinzipiellen Schnittdarstellung gezeigt. Der Aufbau des Verkleidungsbauteils 10₂ gemäß dem zweiten Ausführungsbeispiel entspricht in weiten Teilen demjenigen des ersten Ausführungsbeispiels, wobei jedoch der Lichtleiter 22 von einer rohrförmigen Hülse 36 umgeben ist. In diesem Fall weist die Hülse 36 einen lichtdurchlässigen Abschnitt 38 und die bereits zuvor erläuterte Schutzschicht 32 auf. In der Offenstellung ist die Hülse 36 so angeordnet, dass das Licht, welches den Lichtleiter 22 im Auskopplungsabschnitt 26 radial verlässt, den lichtdurchlässigen Abschnitt 38 der Hülse 36 und anschließend die Durchgangsöffnung 18 passieren kann. Die Richtung, mit welcher das Licht die Durchgangsöffnung 18 durchquert, ist mit dem Pfeil P₃ gekennzeichnet und entspricht der Richtung, mit welcher das Licht das Verkleidungsbauteil 10₁ nach dem ersten Ausführungsbeispiel verlässt.

Um die Beleuchtungseinrichtung 20 in die Schließstellung zu überführen, wird die Hülse 36 mittels der hier ebenfalls nicht dargestellten Verstelleinrichtung 34 ausgehend von der Offenstellung in die durch den Pfeil P₄ gekennzeichnete Richtung gedreht. Die Schutzschicht 32 verschließt in der Schließstellung die Durchgangsöffnung 18, so dass das Licht zwar den Lichtleiter 22 im Auskopplungsabschnitt 26 radial verlassen, nicht aber die Hülse 36 durchqueren kann. Entsprechend muss der Lichtleiter 22 selbst nicht gedreht werden, wobei es durchaus möglich ist, den Lichtleiter 22 zusammen mit der Hülse 36 zu drehen.

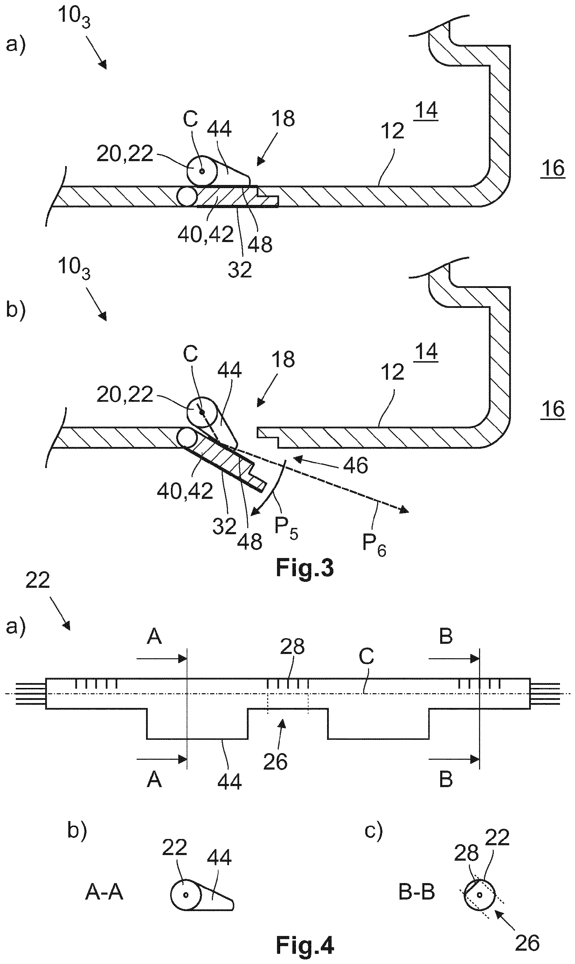

In Figur 3a ist ein drittes Ausführungsbeispiel des erfindungsgemäßen Verkleidungsbauteils 10₃ anhand einer prinzipiellen Schnittdarstellung in der Schließstellung gezeigt. In diesem Ausführungsbeispiel ist die Durchgangsöffnung 18 mit einem Verschlussmittel 40 verschlossen, welches als eine Klappe 42 ausgebildet ist. Die Klappe 42 ist drehbar an der Wandung 12 des Verkleidungsbauteils 10₃ gelagert und kann in die in Figur 3a dargestellte Schließstellung vorgespannt werden, wozu eine nicht dargestellte Drehfeder verwendet werden kann. Zum Überführen der Klappe 42 in die Offenstellung weist der Lichtleiter 22 exzentrische Abschnitte 44 auf, welche ähnlich wie Nocken auf die Klappe 42 wirken. Wird nun der Lichtleiter 22 entlang der mit dem Pfeil P₅ gekennzeichneten Richtung gedreht, wird das Verschlussmittel 40 gegen die Vorspannkraft der Drehfeder geöffnet. Das Licht, welches den Lichtleiter 22 radial verlässt, kann nun die Durchgangsöffnung 18 durch einen von der Klappe 42 freigegebenen Spalt 46 verlassen.

Um das Licht noch weiter seitlich vom Verkleidungsbauteil 10₃ abzustrahlen und auch weiter seitlich angeordnete Abschnitte des Umfelds des Fahrzeugs auszuleuchten, kann die Klappe 42 auf ihrer zum Innenraum 14 hingewandten Seite eine reflektierende Schicht 48 aufweisen. Der hierdurch bewirkte Strahlengang ist durch den Pfeil P₆ dargestellt. Auf der dem Innenraum 14 abgewandten Seite kann die Klappe 42 die bereits zuvor erläuterte Schutzschicht 32 aufweisen, die beispielsweise schmutzabweisend oder besonders gehärtet sein kann, um die Klappe 42 selbst vor einer Verschmutzung oder einer Beschädigung zu schützen. Hierdurch kann gewährleistet werden, dass die Klappe 42 auch bei einer stärkeren Verschmutzung der äußeren Wandungsoberfläche des Verkleidungsbauteils 10₃ von der Schließstellung in die Offenstellung und zurück bewegt werden kann und durch den Schmutz nicht blockiert wird.

In Figur 4a ist der Lichtleiter 22, der im dritten Ausführungsbeispiel des Verkleidungsbauteils 10₃ verwendet wird, anhand einer prinzipiellen Darstellung gezeigt. Man erkennt, dass die exzentrischen Abschnitte 44 des Lichtleiters 22 außerhalb des Auskopplungsabschnitts 26 angeordnet sind. Dies muss aber nicht zwangsläufig der Fall sein, da die exzentrischen Abschnitte 44 auch transparent ausgeführt sein können, so dass das Licht, welches den Lichtleiter 22 radial in den Auskopplungsabschnitt 26 verlässt, auch die exzentrischen Abschnitte 44 durchqueren kann.

Die Figuren 4b und 4c zeigen den in Figur 4a dargestellten Lichtleiter 22 entlang der Schnittebenen A-A und B-B. In Figur 4b ist der exzentrische Abschnitt 44 des Lichtleiters 22 gut erkennbar, während in Figur 4c der Auskopplungsabschnitt 26 und die Kerben 28 oder Ausbeulungen zu sehen sind.

In Figur 5a ist ein viertes Ausführungsbeispiel des erfindungsgemäßen Verkleidungsbauteils 10₅ anhand einer prinzipiellen Schnittdarstellung in der Schließstellung und in Figur 5b in der Offenstellung gezeigt, wobei das vierte Ausführungsbeispiel welches in weiten Teilen dem dritten Ausführungsbeispiel gleicht. Im Gegensatz zum dritten Ausführungsbeispiel befindet sich die reflektierende Schicht 48 jedoch nicht auf der Klappe 42, sondern ist auf den exzentrischen Abschnitten 44 und des Lichtleiters 22 angeordnet, wobei die reflektierende Schicht insbesondere auf der Seite der exzentrischen Abschnitte 44 angeordnet ist, welche mit der Klappe 42 in Kontakt tritt. Folglich verlässt das Licht den Lichtleiter 22 über die exzentrischen Abschnitte 44. Der hierdurch bewirkte Strahlengang entspricht im Wesentlichen demjenigen, der mit dem dritten Ausführungsbeispiel erlangt wird. Wie aus den Figuren 6a bis 6c erkennbar, müssen im vierten Ausführungsbeispiel die Auskopplungsabschnitte 26 und die Kerben 28 oder die Ausbeulungen innerhalb der exzentrischen Abschnitte 44 angeordnet sein, damit das Licht den Lichtleiter 22 über die exzentrischen Abschnitte 44 verlassen kann.

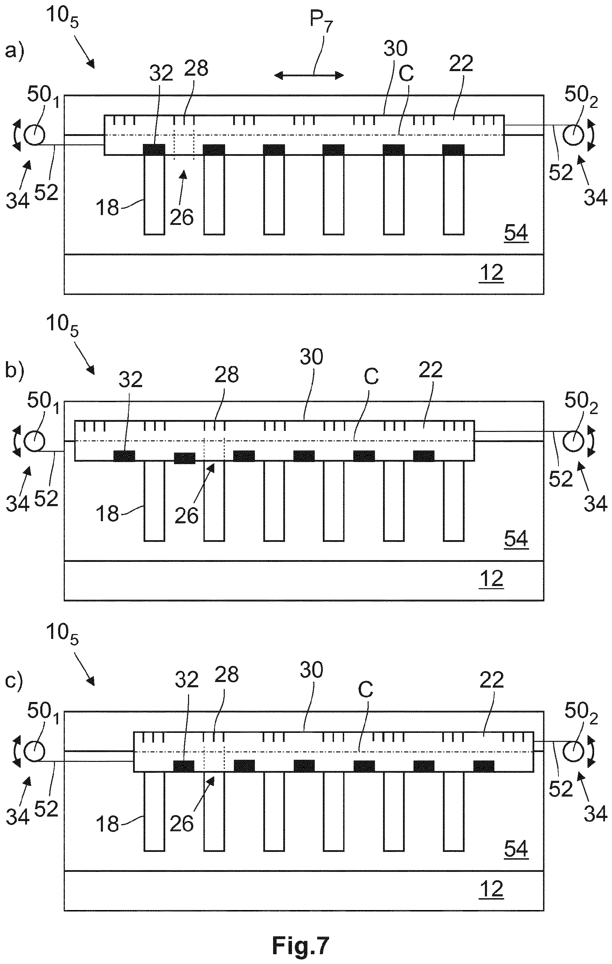

In Figur 7a-c ist ein fünftes Ausführungsbeispiel des vorschlagsgemäßen Verkleidungsbauteils 10₅ anhand einer Draufsicht dargestellt. Man erkennt, dass die Durchgangsöffnungen 18 einen in etwa rechteckigen Querschnitt aufweisen, wobei die längeren Kanten in etwa senkrecht zum Lichtleiter 22 verläuft. Der Lichtleiter 22 verläuft etwas oberhalb der kürzeren, in den Figuren 7a-c oberen Kanten der Durchgangsöffnungen 18 und ist entlang der durch den Pfeil P₇ gekennzeichneten Richtung axial verschiebbar, wozu die hier nur prinzipiell dargestellte Verstelleinrichtung 34 dient. Die Verstelleinrichtung 34 kann zwei Seilwinden 50 aufweisen, welche jeweils über ein Seil 52 mit der Beleuchtungseinrichtung 20 verbunden sind und diese entlang der mit dem Pfeil P₇ gekennzeichneten Richtung hin und her bewegen können. Der Lichtleiter 22 weist eine Anzahl der Schutzschichten 32 auf, die räumlich voneinander getrennt auf der Oberfläche 30 des Lichtleiters 22 angeordnet sind und diese mehr oder weniger weit überstreichen. In den Zwischenräumen zwischen den Schutzschichten 32 ist eine Anzahl der Auskopplungsabschnitte 26 angeordnet.

In Figur 7a befindet sich die Beleuchtungseinrichtung 20 in der Schließstellung. Man erkennt, dass die Schutzschicht 32 die Durchgangsöffnungen 18 verdeckt. Wird jedoch der Lichtleiter 22 mit der Verstelleinrichtung 34 aus der Schließstellung weg in die Offenstellung bewegt, beispielsweise in die in den Figuren 7b oder in Figur 7c dargestellten Positionen, so werden die Durchgangsöffnungen 18 nicht mehr von den Schutzschichten 32 verdeckt. Vielmehr werden die Durchgangsöffnungen 18 nun mehr von den Auskopplungsabschnitten 26 überdeckt. Folglich kann das Licht, welches den Lichtleiter 22 in den Auskopplungsabschnitt 26 radial verlässt, nunmehr auch die Durchgangsöffnungen 18 durchqueren und folglich das Umfeld des Fahrzeugs leuchten.

Im fünften Ausführungsbeispiel sind die Durchgangsöffnungen 18 und der Lichtleiter 22 auf einem separaten Wandungsabschnitt 54 angeordnet, der auf nicht näher gezeigte Weise mit der übrigen Wandung 12 des Verkleidungsbauteils 10₅ verbunden ist.

Die Abmessungen des Verkleidungsbauteils 10 muss nicht verändert werden, um es mit der Lichtquelle 34 und der Beleuchtungseinrichtung 26 zu versehen. Der zusätzliche konstruktive Aufwand bleibt daher sehr gering. Das von der Lichtquelle 34 und der Beleuchtungseinrichtung 26 hervorgerufene Mehrgewicht beträgt ca. 300 g, was im vertretbaren Rahmen liegt. Die ausgeleuchtete Fläche beträgt ca. 1200 bis 1400 mm in Längsrichtung des Fahrzeugs und ca. 400 bis 600 mm in Querrichtung des Fahrzeugs.

In allen Fällen kann die Länge der Durchgangsöffnungen 18 Werte von 10 bis 300 mm annehmen und der Abstand zwischen zwei benachbarten Durchgangsöffnungen zwischen 5 und 25 mm betragen. Die Breite der Durchgangsöffnungen 18 kann Werte zwischen 5 und 25 mm annehmen. Die Beleuchtungsstärke beträgt ca. zwischen 4 und 50 lx (Lux) auf dem Boden. Die Leistungsaufnahme einer von der Lichtquelle umfassten LED-Platine beträgt vorzugsweise 16 W (Watt). Der Lichtleiter 22 kann beispielsweise eine Länge von 650 bis 900 mm und einen Durchmesser von 4 bis 5,5 mm aufweisen.

### Bezugszeichenliste

- 10, 10₁ - 10₅: Verkleidungsbauteil
- 12: Wandung
- 14: Innenraum
- 16: Außenbereich
- 18: Durchgangsöffnung
- 20: Beleuchtungseinrichtung
- 22: Lichtleiter
- 24: Dichtung
- 26: Auskopplungsabschnitt
- 28: Kerben, Ausbeulungen
- 30: Oberfläche
- 32: Schutzschicht
- 34: Verstelleinrichtung
- 36: Hülse
- 38: lichtdurchlässiger Abschnitt
- 40: Verschlussmittel
- 42: Klappe
- 44: exzentrischer Abschnitt
- 46: Spalt
- 48: reflektierende Schicht
- 50: Seilwinde
- 52: Seil
- 54: separater Wandungsabschnitt

- C: Achse
- L₁, L₂: Linien
- P₁ - P₇: Pfeile

## Patentansprüche

1. Verkleidungsbauteil für ein Fahrzeug, umfassend
- eine Wandung (12), welche einen Innenraum (14) des Verkleidungsbauteils (10) begrenzt,
- eine oder mehrere Durchgangsöffnungen (18), welche die Wandung (12) durchdringen,
- eine im Innenraum des Verkleidungsbauteils (10) angeordnete Beleuchtungseinrichtung (20), welche mit einer Lichtquelle verbindbar ist, und
- eine Verstelleinrichtung (34), mit welcher die Beleuchtungseinrichtung (20) zwischen einer Offenstellung, in welcher von der Beleuchtungseinrichtung (20) abgestrahltes Licht die Durchgangsöffnungen (18) durchlaufen kann, und einer Schließstellung, in welcher das von der Beleuchtungseinrichtung (20) abgestrahlte Licht die Durchgangsöffnungen (18) nicht durchlaufen kann, verstellbar ist,
**dadurch gekennzeichnet, dass** die Beleuchtungseinrichtung (20) zumindest einen mit der Verstelleinrichtung (34) zusammenwirkenden Lichtleiter (22) umfasst, der einen oder mehrere Auskopplungsabschnitte (26) aufweist, in denen das Licht aus dem Lichtleiter (22) austreten kann, wobei die Verstelleinrichtung (34) in der Offenstellung die Auskopplungsabschnitte (26) so in Bezug zu den Durchgangsöffnungen (18) anordnet, dass das Licht die Durchgangsöffnungen (18) durchlaufen kann.

2. Verkleidungsbauteil nach Anspruch 1,
**dadurch gekennzeichnet, dass** der Lichtleiter (22) eine Längsachse (C) aufweist und mittels der Verstelleinrichtung (34) zwischen der Offenstellung und der Schließstellung um die Längsachse (A) drehbar oder entlang der Längsachse (A) axial verschiebbar ist oder zwischen der Offenstellung und der Schließstellung schwenkbar ist.

3. Verkleidungsbauteil nach einem der vorherigen Ansprüche,
**dadurch gekennzeichnet, dass** das Verkleidungsbauteil Verschlussmittel (40) aufweist, mit denen die Durchgangsöffnungen (18) verschließbar sind.

4. Verkleidungsbauteil nach Anspruch 3,
**dadurch gekennzeichnet, dass** die Verschlussmittel (40) mit der Verstelleinrichtung (34) betätigbar sind und die Durchgangsöffnungen (18) in der Offenstellung geöffnet und in der Schließstellung geschlossen sind.

5. Verkleidungsbauteil nach Anspruch 4,
**dadurch gekennzeichnet, dass** der Lichtleiter (22) eine Längsachse (A) aufweist und mittels der Verstelleinrichtung (34) zwischen der Offenstellung und der Schließstellung um die Längsachse (A) drehbar ist, wobei der Lichtleiter (22) einen oder mehrere exzentrische Abschnitte (44) aufweist, die so mit den Verschlussmitteln (40) zusammenwirken, dass die Durchgangsöffnungen (18) durch Drehen des Lichtleiters (22) geöffnet und geschlossen werden können.

6. Verkleidungsbauteil nach einem der vorherigen Ansprüche,
**dadurch gekennzeichnet, dass** die Beleuchtungseinrichtung (20) eine im Wesentlichen rohrförmige Hülse (36) umfasst, welche den Lichtleiter (22) umschließt, wobei die Hülse (36) einen oder mehrere lichtdurchlässige Abschnitte aufweist, in denen das Licht aus der Hülse (36) austreten kann und die Hülse (36) mittels der Verstelleinrichtung (34) zwischen der Offenstellung und der Schließstellung verstellbar ist.

7. Verkleidungsbauteil nach Ansprüchen 3 und 6,
**dadurch gekennzeichnet, dass** die Hülse (36) eine Längsachse (A) aufweist und mittels der Verstelleinrichtung (34) zwischen der Offenstellung und der Schließstellung um die Längsachse (A) drehbar ist, wobei die Hülse (36) einen oder mehrere exzentrische Hülsenabschnitte aufweist, die so mit den Verschlussmitteln (40) zusammenwirken, dass die Durchgangsöffnungen (18) durch Drehen des Lichtleiters (22) geöffnet und geschlossen werden können.

8. Verkleidungsbauteil nach Ansprüchen 1, 4, 6 oder 7,
**dadurch gekennzeichnet, dass** der Lichtleiter (22), die Verschlussmittel (40) und/oder die Hülse (36) eine Schutzschicht (32) aufweisen, mittels welcher die Beleuchtungseinrichtung (20) vor Beschädigungen schützbar ist.

9. Verkleidungsbauteil nach einem der vorherigen Ansprüche,
**dadurch gekennzeichnet, dass** die Wandung (12) einen separaten Wandungsabschnitt (54) umfasst und die Durchgangsöffnungen (18) und/oder die Beleuchtungseinrichtung (20) und/oder die Verstelleinrichtung (34) und/oder die Lichtquelle auf dem separaten Wandungsabschnitt (54) angeordnet sind, der mit der Wandung (12) verbindbar ist.

10. Fahrzeug, umfassend ein Verkleidungsbauteil nach einem der vorherigen Ansprüche.

11. Fahrzeug nach Anspruch 10,
**dadurch gekennzeichnet, dass** das Verkleidungsbauteil (10) so am Fahrzeug montiert ist, dass das die Durchgangsöffnungen (18) durchdringende Licht beim bestimmungsgemäßen Gebrauch des Fahrzeugs zum Boden hin abstrahlt.

12. Fahrzeug nach einem der Ansprüche 10 oder 11,
**dadurch gekennzeichnet, dass** das Verkleidungsbauteil (10) eine Seitenverkleidung, ein Trittbrett oder ein Stoßfänger des Fahrzeugs ist.

## Claims

1. Cladding element for a motor vehicle, comprising
- a walling (12) that encompasses an inner space (14) of the cladding element (10),
- one or more through openings (18) that extend through the walling (12),
- an illumination device (20) disposed in the inner space (14) of the cladding element (10) and which can be connected to a light source, and
- an adjustment device (34), by means of which the illumination device (20) can be adjusted between an open position, in which light emitted by the illumination device (20) can flow through the through openings (18), and a closed position, in which light emitted by the illumination device (20) cannot flow through the through openings (18),
**characterized in that** the illumination device (20) comprises at least one light conductor (22) that engages with the adjustment device (34) and which comprises one or more decoupling sections (26) in which the light can escape from the light conductor (22), wherein, in the open position, the adjustment device (34) arranges the decoupling sections (26) respective to the through openings (18) such that the light can flow through the through openings (18).

2. Cladding element in accordance with claim 1,
**characterized in that** the light conductor (22) comprises a longitudinal axis (C) and can, by means of the adjustment device (34), be rotated around the longitudinal axis (A) or shifted along the longitudinal axis (A) between the open position and the closed position or can be swiveled between the open position and the closed position.

3. Cladding element in accordance with either of the preceding claims,
**characterized in that** the cladding element comprises closing means (40) with which the through openings (18) can be closed.

4. Cladding element in accordance with claim 3,
**characterized in that** the closing means (40) can be activated by means of the adjustment device (34) and **in that** the through openings (18) are open in the open position and are closed in the closed position.

5. Cladding element in accordance with claim 4,
**characterized in that** the light conductor (22) comprises a longitudinal axis (A) and can be rotated around the longitudinal axis (A) between the open position and the closed position by means of the adjustment device (34), wherein the light conductor (22) comprises one or more eccentric sections (44) that interact with the closing means (40) such that the through openings (18) can be opened and closed by rotating the light conductor (22).

6. Cladding element in accordance with any of the preceding claims,
**characterized in that** the illumination device (20) comprises an essentially tube-shaped sheath (36) which encloses the light conductor (22), wherein the sheath (36) comprises one or more light-permeable sections in which the light can escape from the sheath (36) and **in that** the sheath can be adjusted between the open position and the closed position by means of the adjustment device (34).

7. Cladding element in accordance with claims 3 and 6,
**characterized in that** the sheath (36) comprises a longitudinal axis (A) and can be rotated around the longitudinal axis (A) between the open position and the closed position by means of the adjustment device (34), wherein the sheath (36) comprises one or more eccentric sheath sections that interact with the closing means (40) such that the through openings can be opened or closed by rotating the light conductor (22).

8. Cladding element in accordance with claims 1, 4, 6 or 7,
**characterized in that** the light conductor (22), the closing means (40) and/or the sheath (36) has a protective coating (32) by means of which the illumination device (20) is protected from damage.

9. Cladding element in accordance with any of the preceding claims,
**characterized in that** the walling (12) comprises a separate walling section (54) and **in that** the through openings (18) and/or the illumination device (20) and/or the adjustment device (34) and/or the light source is(are) disposed on the separate walling section (54), which can be connected to the walling (12).

10. Motor vehicle having a cladding component in accordance with any of the preceding claims.

11. Motor vehicle in accordance with claim 10,
**characterized in that** the cladding element (10) is mounted on the motor vehicle such that the light flowing through the through openings (18) is cast onto the ground when the motor vehicle is being used for the purpose intended.

12. Motor vehicle in accordance with claim 10 or 11,
**characterized in that** the cladding element (10) is a side panel, a running board or a fender of the motor vehicle.

## Revendications

1. Composant d'habillage de véhicule comprenant :
- une paroi (12) qui délimite le volume intérieur (14) du composant d'habillage (10),
- un ou plusieurs orifices (18) traversant la paroi (12),
- une station d'éclairage (20) dans le volume intérieur du composant d'habillage (10) et qui peut être relié à une source lumineuse, et
- une installation de réglage (34) permettant de régler l'installation d'éclairage (20) entre une position ouverte dans laquelle la lumière émise par l'installation d'éclairage (20) passe les orifices traversant (18) et une position de fermeture dans laquelle la lumière émise par l'installation d'éclairage (20) est bloquée par les orifices traversants (18),
composant **caractérisé en ce que**
l'installation d'éclairage (20) comporte au moins un guide de lumière (22) coopérant avec l'installation de réglage (34), ce guide ayant un ou plusieurs segments de découplage (26) par lesquels la lumière peut sortir du guide de lumière (22),
* l'installation de réglage (34) en position ouverte, positionne les segments de couplage de sortie (26) par rapport aux orifices traversants (18) pour que la lumière puisse passer par les orifices traversants (18).

2. Composant d'habillage selon la revendication 1,
**caractérisé en ce que**
le guide de lumière (22) a un axe longitudinal (C) et l'installation de réglage (34) le pivote entre la position ouverte et la position fermée autour de l'axe longitudinal (A) selon lequel il est coulissant axialement et pivote entre la position ouverte et la position fermée.

3. Composant d'habillage selon l'une des revendications précédentes,
**caractérisé en ce que**
le composant d'habillage comporte des moyens de fermeture (40) permettant de fermer les orifices traversants (18).

4. Composant d'habillage selon la revendication 3,
**caractérisé en ce que**
les moyens de fermeture (40) sont actionnés par l'installation de réglage (34) et les orifices traversants (18) sont ouverts en position ouverte ou fermés en position fermée.

5. Composant d'habillage selon la revendication 4,
**caractérisé en ce que**
- le guide de lumière (22) a un axe longitudinal (A) et l'installation de réglage (34) le tourne entre la position ouverte et la position fermée autour de l'axe longitudinal (A), et
- le guide de lumière (22) a un ou plusieurs segments excentrés (44) qui coopèrent avec les moyens de fermeture (40) pour ouvrir ou fermer les orifices traversants (18) par la rotation du guide de lumière (22).

6. Composant d'habillage selon l'une des revendications précédentes,
**caractérisé en ce que**
l'installation d'éclairage (20) comprend un manchon (36) pratiquement tubulaire entourant le guide lumière (22), et
le manchon (36) a un ou plusieurs segments transparents à la lumière par lesquels la lumière peut sortir du manchon (36), le manchon (36) se réglant à l'aide de l'installation de réglage (34) entre la position ouverte et la position fermée.

7. Composant d'habillage selon les revendications 3 et 6,
**caractérisé en ce que**
le manchon (36) a un axe longitudinal (A) et l'installation de réglage (34), le tourne autour de l'axe longitudinal (A) entre la position ouverte et la position fermée, et
le manchon (36) a un ou plusieurs segments de manchon excentrés coopérant avec les moyens de fermeture (40) pour ouvrir ou fermer les orifices traversants (18) par la rotation du guide de lumière (22).

8. Composant d'habillage selon les revendications 1, 4, 6 ou 7,
**caractérisé en ce que**
le guide de lumière (22), le moyen de fermeture (40) et/ou le manchon (36) ont une couche protectrice (32) qui protège l'installation d'éclairage (20) contre les dommages.

9. Composant d'habillage selon l'une des revendications précédentes,
**caractérisé en ce que**
la paroi (12) a un segment de paroi (54) séparé et les orifices traversants (18) et/ou l'installation d'éclairage (20) et/ou l'installation de réglage (34) et/ou la source lumineuse sont sur le segment de paroi (54) séparé qui peut être relié à la paroi (12).

10. Véhicule comprenant un composant d'habillage selon l'une quelconque des revendications précédentes.

11. Véhicule selon la revendication 10,
**caractérisé en ce que**
le composant d'habillage (10) est installé dans le véhicule pour que les orifices traversants (18) permettent à la lumière qui passe, d'éclairer le plancher pour une utilisation déterminée du véhicule.

12. Véhicule selon la revendication 10 ou 11,
**caractérisé en ce que**
le composant d'habillage (10) est un habillage latéral, un marche-pied ou un pare-choc du véhicule.
